# EUROPÄISCHE PATENTSCHRIFT

(11) **EP 2 402 182 B1**
(45) Veröffentlichungstag und Bekanntmachung des Hinweises auf die Patenterteilung: **04.06.2014**
(21) Anmeldenummer: 10168261.5
(22) Anmeldetag: 02.07.2010
(51) Int. Cl.: B60H 1/00, H02J 7/00, B60R 16/03, H02P 6/08

(54) **System zum Betreiben einer Gleichstrom-Motorapplikation für ein Kraftfahrzeug**
System for operating an direct-current motor application for a vehicle
Système d'opération d'un moteur courant continu dans une application pour un véhicule

(43) Veröffentlichungstag der Anmeldung: 04.01.2012
(73) Patentinhaber: Flextronics International Kft., 8060 Mór (HU)
(72) Erfinder: Fortmeier, Ignaz, 67067, Ludwigshafen (DE)
(74) Vertreter: Rupprecht, Kay

(56) Entgegenhaltungen:
- WO-A1-2006/013175
- DE-A1-102007 050 083
- GB-A- 2 453 632
- US-A1- 2003 117 019
- US-A1- 2005 279 113

## Beschreibung

Die vorliegende Erfindung betrifft ein System zum Betreiben einer Gleichstrom-Motorapplikation für ein Kraftfahrzeug, wobei das System eine Gleichstrom-Motorapplikation und ein Motorapplikations-Steuergerät zum Steuern der Gleichstrom-Motorapplikation umfasst. Dabei kommen als Gleichstrom-Motorapplikationen insbesondere ein Kühlerlüfter oder eine Kraftstoffpumpe in Betracht, die beide einen Gleichstrommotor besitzen, um ihre Funktion zu erfüllen.

Aus der DE 103 48 130 A1 ist ein Kühlerlüfter einer Kühlanlage für einen Verbrennungsmotor bekannt, der zur Ansteuerung des Lüftermotors eine eigene Steuerelektronik aufweist, die durch das Steuergerät des Antriebsaggregats, d.h. durch das Motorsteuergerät angesteuert wird. Derartige Kühlerlüfter werden auch als Gebläse bezeichnet und weisen Lüfterblätter auf, die von einem Gleichstrommotor angetrieben werden. Zur stufenlosen Steuerung des Kühlerlüfters wird vom Motorsteuergerät ein der Solldrehzahl des Gleichstrommotors proportionales pulsweitenmoduliertes Signal an die Steuerelektronik des Kühlerlüfters weitergeleitet. Weiterhin wird der Steuerelektronik des Kühlerlüfters eine Versorgungsspannung vom Bordnetz, insbesondere von der Fahrzeugbatterie zugeführt. Die Steuerelektronik von herkömmlichen Kühlerlüftermotoren ist im frontendseitigen Bereich des Motorraums in unmittelbarer Nähe zum Kühlerlüfter angeordnet, da die Steuerelektronik über eine getaktete Leitung, auch getaktete "Powerleitung" genannt, mit dem Gleichstrommotor des Kühlerlüfters verbunden ist. Diese Leitung sollte so kurz wie möglich sein, um EMV-Probleme (EMV = elektromagnetische Verträglichkeit) so gering wie möglich zu halten. Die Steuerelektronik und der Kühlerlüftermotor bilden somit eine Einheit. Durch die Taktung kann es nämlich zur Bildung von Oberschwingungen bzw. Oberwellen kommen, die zu unerwünschten Nebeneffekten wie Geräuschbildung, Erwärmung und den oben angesprochenen Problemen mit der elektromagnetischen Verträglichkeit führen können. Ein weiteres Problem herkömmlicher Kühlanlagen ist es, dass der Kühlerlüfter und seine Steuerelektronik in der Regel im Frontendbereich des Motorraums angeordnet sind, wo Platzmangel herrscht.

Die oben beispielhaft für Kühlanlagen dargestellten Probleme ergeben sich gleichermaßen für andere Gleichstrommotor betriebene Anwendungen, wie beispielsweise für die Kraftstoffpumpe oder dergleichen.

Der vorliegenden Erfindung liegt daher die Aufgabe zugrunde, ein System zum Betreiben einer Gleichstrom-Motorapplikation für ein Kraftfahrzeug bereitzustellen, welches es ermöglicht, die Drehzahl des Gleichstrommotors der Gleichstrom-Motorapplikation stufenlos zu regeln, und welches dabei im eingebauten Zustand im Vergleich zum Stand der Technik Platzprobleme im Motorraum vermeidet.

DE 10 2007 050 083 A1 beschreibt ein System gemäß dem Oberbegriff des Anspruchs 1.

Diese Aufgabe wird gelöst durch ein System mit den Merkmalen des Anspruchs 1. Bevorzugte Ausführungsformen sind in den abhängigen Ansprüchen angegeben.

Die Erfindung umfasst ein System zum Betreiben einer Gleichstrom-Motorapplikation für ein Kraftfahrzeug, wobei das System wenigstens eine Gleichstrom-Motorapplikation und ein Motorapplikations-Steuergerät bzw. eine Steuerelektronik zum Steuern der wenigstens einen Gleichstrom-Motorapplikation umfasst. Erfindungsgemäß ist das Motorapplikations-Steuergerät von der Gleichstrom-Motorapplikation entfernt angeordnet. Im Gegensatz zu aus dem Stand der Technik bekannten Systemen ist das Motorapplikations-Steuergerät also von der Gleichstrom-Motorapplikation entkoppelt, d.h. es ist nicht in unmittelbarer Nähe zu dem Gleichstrommotor der jeweiligen Anwendung angeordnet. Dies wird dadurch ermöglicht, dass die Steuerelektronik erfindungsgemäß einen DC/DC-Wandler zur Ansteuerung wenigstens einer Gleichstrom-Motorapplikation mittels einer Gleichspannung aufweist. Bei einer Gleichstrom-Motorapplikation kann es sich, wie eingangs erläutert, beispielsweise um einen Kühlerlüfter handeln, der einen Lüfterblätter antreibenden Gleichstrommotor umfasst.

Ein wesentlicher Punkt der Erfindung liegt darin, dass die vorteilhafte entfernte Anordnung des Motorapplikations-Steuergeräts und der Gleichstrom-Motorapplikation die Platzprobleme im Motorraum, insbesondere im Frontendbereich des Motorraums vermeidet. Die Probleme, die mit einer derartigen entfernten Anordnung eines Motorapplikations-Steuergeräts bei einer aus dem Stand der Technik bekannten Gleichstrom-Motorapplikation einhergehen, werden durch den Einsatz eines DC/DC-Wandlers in der Steuerelektronik vermieden, weil EMV-Probleme durch das resultierende Ansteuerverfahren mittels einer Gleichspannung weitgehend ausgeräumt werden können. Durch den vorteilhaften Einsatz eines DC/DC-Wandlers kann das Motorapplikations-Steuergerät somit entfernt von der zugeordneten Gleichstrom-Motorapplikation bzw. von den zugeordneten Gleichstrom-Motorapplikationen angeordnet werden.

Weitere Vorteile der Erfindung liegen in der einfachen Drehzahlsteuerung einer oder mehrerer Gleichstrom-Motorapplikationen durch die Variation der Motorspannung, die durch den DC/DC-Wandler erzeugt wird. Dadurch, dass durch den Einsatz eines DC/DC-Wandlers die Möglichkeit einer entfernten Anordnung des Motorapplikations-Steuergeräts von einer Gleichstrom-Motorapplikation eröffnet wird, können auch mehrere gleiche oder unterschiedliche Gleichstrom-Motorapplikationen durch ein einziges Motorapplikations-Steuergerät angesteuert werden. Verschiedene Gleichstrom-Motorapplikationen können dabei wiederum entfernt voneinander angeordnet sein. Weiterhin sind durch die Verwendung eines DC/DC-Wandlers zur Leistungsversorgung des Gleichstrommotors ein weicher Anlauf und ein weicher Wechsel der Gleichstrommotordrehzahl realisierbar. Darüber hinaus lässt sich eine Überspannungsschutzeinrichtung realisieren, welche also eine Begrenzung der Ausgangsspannung des Motorapplikations-Steuergeräts bewirkt und somit die angeschlossenen Gleichstrommotoren vor einer Überspannung schützt.

Das System gemäß der Erfindung erlaubt es im Übrigen die Funktion der angeschlossenen Gleichstrom-Motorapplikation selbstständig zu überwachen. Insbesondere kann die Funktion in Hinblick auf eine Kurzschlusserkennung, eine Blockade, eine Überlastung bzw. Schwergängigkeit oder auf einen Abriss hin, d.h. eine Unterbrechung der Last-Leitung überwacht werden. Weiterhin ist eine Spannungsüberwachung möglich.

Das System umfasst vorzugsweise einen externen Signalgeber, der das Motorapplikations-Steuergerät mit einem pulsweitenmodulierten Signal speist. Dabei handelt es sich insbesondere um das Motorsteuergerät. Das pulsweitenmodulierte Signal (PWM-Signal) wird dann in dem Motorapplikations-Steuergerät ausgewertet und zur Ansteuerung des DC/DC-Wandlers aufbereitet. Über die PWM-Verbindungsleitung zwischen dem Motorsteuergerät und dem Motorapplikations-Steuergerät kann darüber hinaus eine Fehlerrückmeldung an das Motorsteuergerät erfolgen.

Der DC/DC-Wandler ist vorzugsweise als sogenannter "Multi Phase Controller", im Folgenden "MPC" genannt, ausgebildet. Die Verwendung eines mehrphasigen DC/DC-Wandlers ist dabei besonders vorteilhaft, weil durch die mehrere Phasen des DC/DC-Wandlers Spannungs- und Stromripple und die Eingangs- und Ausgangsripple reduziert werden, wodurch das EMV-Verhalten des Systems verbessert wird. Die geringeren ohmschen Verluste mehrphasiger Schaltungstopologien verbessern im Übrigen den Wirkungsgrad des Systems. Darüber hinaus tragen kleinere Bauteile, die weniger Leistung benötigen, zu einem kompakten Design bei. Die Verlustleistung kann weiterhin auf mehrere Bauteile verteilt werden. Insgesamt wird dadurch auch der benötigte Kühlaufwand der Steuerelektronik reduziert, da die Wärmeabfuhr verbessert wird.

In einer Ausführungsform sind die Gleichstrom-Motorapplikationen innerhalb eines Motorraums eines Kraftfahrzeugs anordnungsfähig und das Motorapplikations-Steuergerät außerhalb des Motorraums anordnungsfähig. Dadurch muss sich das Motorapplikations-Steuergerät nicht mehr innerhalb des Motorraums in der Nähe der Gleichstrom-Motorapplikation befinden, wodurch im Motorraum Platz gespart werden kann.

Bei der Erfindung ist das Motorapplikations-Steuergerät über sogenannte Powerleitungen zur Übertragung der durch den DC/DC-Wandler erzeugten Gleichspannung an den Gleichstrommotor mit der Gleichstrom-Motorapplikation verbunden. Im Vergleich zum Stand der Technik führen daher weniger Leitungen durch den Motorraum zur jeweiligen Gleichstrom-Motorapplikation.

In einer vorteilhaften Ausführungsform sind die zwei Leitungen über einen zweipoligen Stecker mit der Gleichstrom-Motorapplikation verbunden. Grundsätzlich denkbar ist jedoch auch jede andere Art der Verbindung möglich. Denkbar ist es beispielsweise die Leitungen zu schweißen oder zu krimpen.

Die Gleichstrom-Motorapplikation kann insbesondere ein Kühlerlüfter oder eine Kraftstoffpumpe sein.

Die Erfindung wird im Folgenden anhand der Zeichnung näher erläutert. Es zeigen:
- Figur 1: ein System zum Betreiben einer Gleichstrom-Motorapplikation (insbesondere eines Kühlerlüfters) nach dem Stand der Technik;
- Figur 2: eine Ausführungsform des erfindungsgemäßen Systems zum Betreiben einer Gleichstrom-Motorapplikation, und
- Figur 3: eine schematische Darstellung eines Motorapplikations-Steuergeräts.

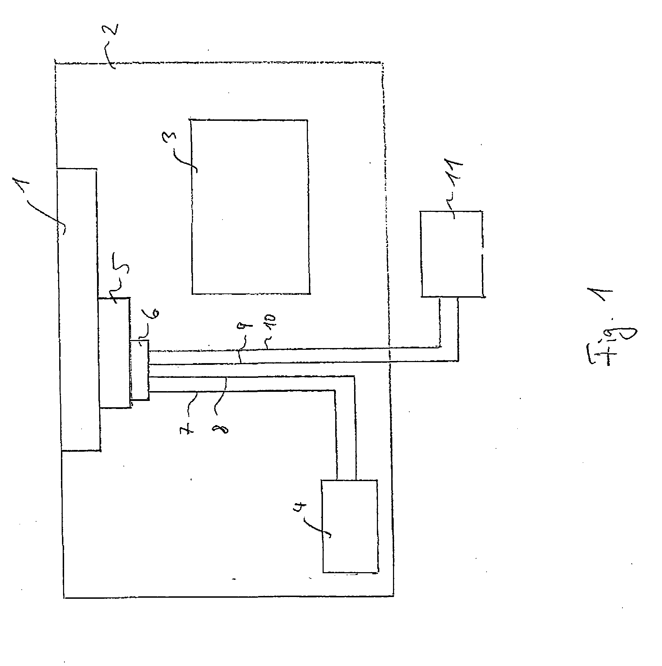

Figur 1 zeigt ein Beispiel für ein System zum Betreiben einer Gleichstrom-Motorapplikation nach dem Stand der Technik. Das System gemäß der Erfindung wird mit Bezug auf die Figur 1 rein beispielhaft anhand eines Kühlerlüfters 1 erläutert. Es versteht sich, dass die nachfolgenden Erläuterungen gleichermaßen auf eine andere Gleichstrom-Motorapplikation übertragbar sind.

In dem System ist ein Kühlerlüfter 1 in einem Motorraum 2 eines Kraftfahrzeugs angeordnet. In diesem Motorraum 2 befindet sich beispielhaft ein Motor 3 und eine Batterie 4. Die Batterie 4 kann grundsätzlich auch außerhalb des Motorraums 2 angeordnet sein. Am Kühlerlüfter 1 ist ein Motorapplikations-Steuergerät 5 angeordnet, sodass der Kühlerlüfter 1 und das Motorapplikations-Steuergerät 5 zusammen eine Einheit bilden.

Mittels eines vierpoligen Steckers 6 ist das Motorapplikations-Steuergerät 5 über zwei Leitungen 7 und 8 zur Übertragung einer Versorgungsspannung mit der Batterie 4 verbunden, wobei die Leitungen zur besseren Unterscheidung im Folgenden als "Powerleitungen" 7 und 8 bezeichnet werden. Weiterhin sind zwei Leitungen 9 und 10, im Folgenden als "Steuerleitungen" bezeichnet, mit einer externen Steuereinheit 11 verbunden. Bei der externen Steuereinheit 11 handelt es sich um einen externen Signalgeber, der ein der Solldrehzahl des Gleichstrommotors proportionales pulsweitenmoduliertes Signal an dem Motorapplikations-Steuergerät 5 bereitstellt. Das pulsweitenmodulierte Signal steuert die Steuerungselektronik bzw. das Motorapplikations-Steuergerät 5 derart an, dass die Drehzahl des Gleichstrommotors im Kühlerlüfter 1 stufenlos auf die gewünschte Drehzahl und damit auf die gewünschte Kühlleistung geregelt bzw. gesteuert werden kann. Die Drehzahl des Lüftermotors wird also mit PWM-Spannung, die von dem Motorapplikations-Steuergerät 5 erzeugt wird, geregelt bzw. gesteuert. Bei der bisherigen Lösung nach dem Stand der Technik wird der Motor also durch eine pulsweitenmodulierte Spannung gesteuert bzw. geregelt.

Nachteilig an dem in Figur 1 gezeigten System gemäß dem Stand der Technik ist, dass sich das Motorapplikations-Steuergerät 5 im Motorraum 2 befindet, da in den heutigen Motorräumen von Kraftfahrzeugen Platzmangel herrscht. Daher ist es erstrebenswert das Motorapplikations-Steuergerät außerhalb des Motorraums anzuordnen. Bei Systemen nach dem Stand der Technik gehen damit jedoch inakzeptable Probleme mit der Leistungsübertragung an die Gleichstrom-Motorapplikation einher. Insbesondere ist dann eine Abschirmung der Powerleitungen von dem Motorapplikations-Steuergerät 5 zu dem Kühlerlüfter 1 notwendig, da durch die elektromagnetischen Einflüsse der getakteten Leitung ansonsten andere elektrische Elemente wie Parksensoren, Infotainment oder dergleichen in ihrer Funktion gestört werden können. Der Grund hierfür ist, dass durch die herkömmlichen Motorapplikations-Steuergeräte eine getaktete Leistung erzeugt wird, die an den Kühlerlüfter 1 übertragen wird. Durch die Taktung kann es zur Bildung von Oberschwingungen bzw. Oberwellen kommen mit z.B. einem Vielfachen der Modulationsfrequenz. Durch diese Oberschwingungen können unerwünschte Nebeneffekte wie Geräuschbildung, Erwärmung und vor allem Probleme mit elektromagnetischer Verträglichkeit entstehen. Um diese Nebeneffekte zu minimieren, muss das Motorapplikations-Steuergerät in der Nähe der Gleichstrom-Motorapplikation angeordnet sein. Wie in der Figur 1 ersichtlich ist, bilden diese somit eine Einheit. Ein Motorapplikations-Steuergerät 5 ist damit maximal einer Gleichstrom-Motorapplikation zuordenbar.

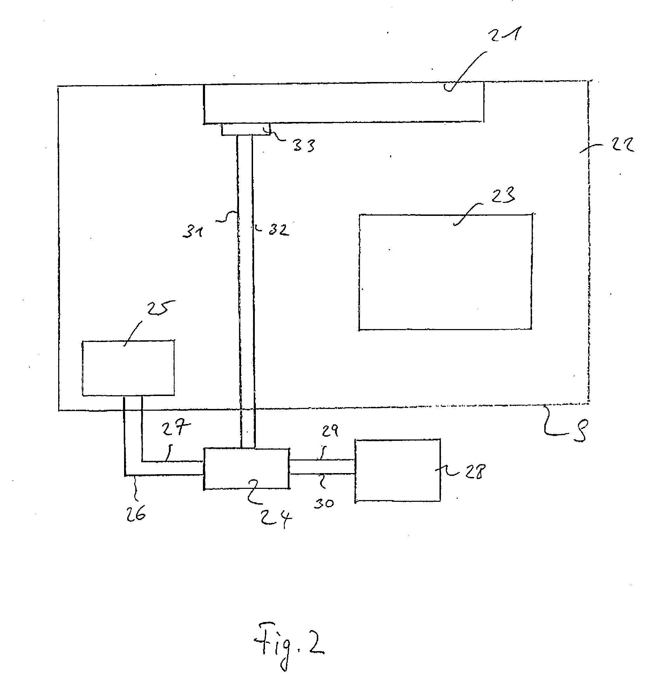

Figur 2 zeigt eine Ausführungsform des erfindungsgemäßen Systems zum Betreiben einer Gleichstrom-Motorapplikation für ein Kraftfahrzeug. In der Ausführungsform des Systems ist ein Kühlerlüfter 21 in einem Motorraum 22 mit einem Motor 23 angeordnet. Ein Motorapplikations-Steuergerät 24 befindet sich außerhalb des Motorraums 22 in einem Innenraum des Kraftfahrzeugs. Die Figur 2 macht deutlich, dass das Steuergerät 24 und der Kühlerlüfter 21 durch eine üblicherweise im Fahrzeug vorgesehene Spritzwand S voneinander getrennt sind oder anders ausgedrückt ist die Spritzwand S zwischen ihnen angeordnet. Das Steuergerät 24 und der Kühlerlüfter 21 bilden damit anders als im Stand der Technik keine Einheit, sondern sind entfernt voneinander angeordnet. Hierdurch ist beispielweise eine Lüftermodulvariation bei gleichbleibendem Steuergerät möglich. Die Anordnung des Steuergeräts 24 auf der durch die Spritzwand S geschützten Seite des Fahrzeugs ist darüber hinaus besonders vorteilhaft, weil das Steuergerät 24 und insbesondere seine Leitungsanschlüsse bzw. der 4-polige Stecker hierdurch nicht mehr die hohen Anforderungen beispielsweise in Bezug auf die Dichtigkeit erfüllen müssen.

Das Motorapplikations-Steuergerät 24 wird von einer im Motorraum 22 angeordneten Batterie 25 über zwei Powerleitungen 26 und 27 mit Energie versorgt. Eine Steuereinheit 28 steuert über die Steuerleitungen 29 und 30 das Motorapplikations-Steuergerät 24 mittels eines pulsweitenmodulierten Signals an. Die vorgenannten zwei Powerleitungen sind vorzugsweise über einen 2-poligen Stecker 33 mit dem Steuergerät 24 verbunden.

Die Figur 2 macht deutlich, dass entgegen dem aus dem Stand der Technik bekannten System das Motorapplikations-Steuergerät 24 in der Nähe des Motorsteuergeräts bzw. der Steuereinheit 28 und vorzugsweise auch in der Nähe der Batterie 25 angeordnet ist. Die Powerleitungen 26, 27 und die Steuerleitungen 29, 30 können damit wesentlich kürzer sein, sodass eine nicht unerhebliche Kabelmenge eingespart werden kann. Wie im Vergleich zu der Figur 1 deutlich wird, müssen dort vier Kabel durch den gesamten Motorraum von der Batterie und vom Motorsteuergerät, welches im Innenraum des Fahrzeugs angeordnet ist, zu dem Kühlerlüfter 1 geführt werden. Im Gegensatz dazu führen von dem entfernt angeordneten Motorapplikations-Steuergerät 24 nur noch zwei Powerleitungen 31 und 32 zu dem Kühlerlüfter 21, die eine durch den DC/DC-Wandler des Motorapplikations-Steuergeräts 24 erzeugte Gleichspannung zur Ansteuerung an den Kühlerlüfter 21 übertragen. Die Powerleitungen 31 und 32 sind vorzugsweise über einen 2-poligen Stecker 33 mit dem Kühlerlüfter 21 verbunden.

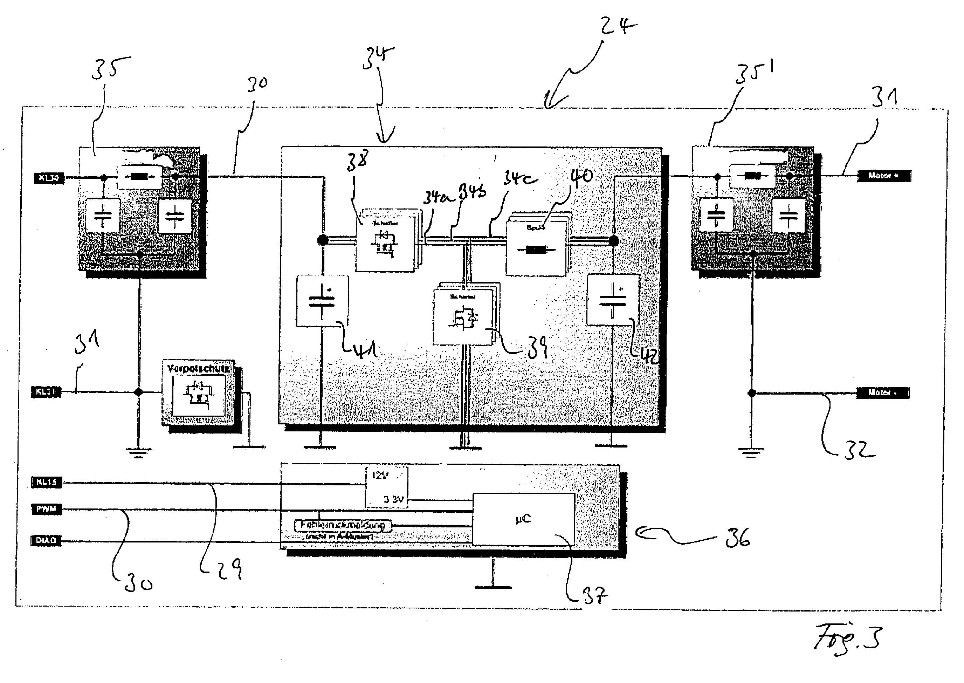

Der DC/DC-Wandler ist vorzugsweise mehrphasig ausgebildet, wie in der Beschreibung zu Figur 3 noch näher erläutert wird. Durch die vorteilhafte Ansteuerung des Kühlerlüfters 21 mittels einer durch den DC/DC-Wandler erzeugten Gleichspannung können zum einen mehrere Gleichstrom-Motorapplikationen durch ein einziges Steuergerät 24 betrieben werden und darüber hinaus müssen die die Gleichspannung übertragenden Powerleitungen 31 und 32 nicht abgeschirmt werden, weil die übertragene Gleichspannung verbesserte EMV-Eigenschaften aufweist, sodass Parksensoren oder andere elektronische Einheiten des Fahrzeugs nicht negativ beeinflusst werden.

Durch den Einsatz eines DC/DC-Wandlers und insbesondere eines mehrphasigen DC/DC-Wandlers muss das Motorapplikations-Steuergerät 24 nicht in unmittelbarer Nähe des Gleichstrommotors der Gleichstrom-Motorapplikation platziert werden, sondern kann in vorteilhafter Weise im geschützten Innenraum hinter dem Spritzschutz S angeordnet werden. In der in Figur 2 gezeigten Ausführungsform kann dadurch der Kühlerlüfter 21 z.B. flacher aufgebaut werden. Durch die flachere Aufbauweise des Kühlerlüfters 21 und der hierdurch resultierende Freiraum ergeben sich darüber hinaus mehr Freiheitsgrade bei der Umsetzung von Fußgänger-Aufprallschutzmaßnahmen. Gemäß der Erfindung sind das Motorapplikations-Steuergerät 24 und die Gleichstrom-Motorapplikation zwei separate Einheiten. Dies ermöglicht es, unterschiedliche Variationen von Gleichstrom-Motorapplikationen mit demselben Motorapplikations-Steuergerät 24 zu verwenden.

Im Folgenden wird kurz auf die Funktionsweise des Systems nach Figur 2 eingegangen. Eine Luftleistung, die der Kühlerlüfter 21 erbringen soll, wird durch ein pulsweitenmoduliertes Signal von der Steuereinheit 28, insbesondere von dem Motorsteuergerät gefordert, indem das Signal über die Steuerleitungen 29 und 30 an das Motorapplikations-Steuergerät 24 übertragen wird. Das pulsweitenmodulierte Signal wird daraufhin in dem Motorapplikations-Steuergerät 24 ausgewertet und zur Ansteuerung des DC/DC-Wandlers aufbereitet. Der DC/DC-Wandler stellt dann entsprechend dem geforderten Signal eine Ausgangsspannung bereit, die über die Powerleitungen 31 und 32 an den Kühlerlüfter 21 übertragen wird.

Figur 3 zeigt eine schematische Darstellung eines Motorapplikations-Steuergeräts 24 gemäß der Erfindung. Das Motorapplikations-Steuergerät 24 umfasst einen mehrphasigen DC/DC-Wandler 34, der über die Powerleitung (KL)30 an eine Spannungsquelle, insbesondere an die Batterie 25 angeschlossen ist. Zwischen die Spannungsquelle und den DC/DC-Wandler 34 kann noch ein EMV-Filter 35 geschaltet sein.

Der mehrphasige DC/DC-Wandler 34 ist über die Leitungen 31 und 32 mit einer Gleichstrom-Motorapplikation verbunden, die In der Figur 3 nicht dargestellt ist. Alternativ oder auch zusätzlich zu dem EMV-Filter 35 kann zwischen den mehrphasigen DC/DC-Wandler 34 und die Gleichstrom-Motorapplikation ein EMV-Filter 35' geschaltet sein, welches die Störfestigkeit des Systems erhöht.

Es sei an dieser Stelle erwähnt, dass grundsätzlich auch der Einsatz eines serienresonanten mehrphasigen DC/DC-Wandlers oder auch eines herkömmlichen einphasigen DC/DC-Wandlers denkbar ist. Besonders vorteilhaft ist der Einsatz eines dreiphasigen DC/DC-Wandlers mit drei Phasen 34a, 34b und 34c, wie er in Figur 3 dargestellt ist.

Das Motorapplikations-Steuergerät 24 weist außerdem eine Steuereinheit 36 auf, die wiederum einen Prozessor 37 umfasst, der über die Steuerleitung 30 ein pulsweitenmoduliertes Signal von der hier nicht dargestellten Motorsteuereinheit 28 erhält.

Um eine gewünschte Drehzahl des Gleichstrommotors der an das Motorapplikations-Steuergerät 24 angeschlossenen Gleichstrom-Motorapplikation herbeizuführen, gibt das Motorsteuergerät 28 ein pulsweitenmoduliertes Signal vor, das proportional zu der gewünschten Drehzahl ist. Das pulsweitenmodulierte Signal wird dann ausgewertet und zur Ansteuerung des mehrphasigen DC/DC-Wandlers 34 in dem Prozessor 37 aufbereitet. Mit dem mehrphasigen DC/DC-Wandler 34 wird entsprechend dem durch das Motorsteuergerät 28 bereitgestellten Signal eine Ausgangsspannung erzeugt, die über die Powerleitungen 31 und 32 an die Gleichstrom-Motorapplikation übertragen wird.

Eine Phase eines mehrphasigen DC/DC-Wandlers der hier angesprochenen Art umfasst Schalter 38 und 39 sowie eine Induktivität 40. Jede Phase weist darüber hinaus einen Eingangskodensator 41 und einen Ausgangskondensator 42. Im Übrigen sind mehrphasige DC/DC-Wandler der hier angesprochenen Art aus dem Stand der Technik bekannt, sodass hier nicht näher darauf eingegangen werden soll. Entscheidend ist, dass das PWM-Signal des Motorsteuergeräts so aufgearbeitet wird, dass der DC/DC-Wandler ein entsprechendes Gleichspannungsausgangssignal erzeugen kann, das an dem Kühlerlüfter 1 eine gewünschte Drehzahl und damit eine gewünschte Kühlleistung einstellt.

### Bezugszeichenliste

- 1: Kühlerlüfter (Gleichstrom-Motorapplikation)
- 2: Motorraum
- 3: Motor
- 4: Batterie
- 5: Motorapplikations-Steuergerät
- 6: vierpoliger Stecker
- 7: Leitung
- 8: Leitung
- 9: Leitung
- 10: Leitung
- 11: Steuereinheit
- 21: Gleichstrom-Motorapplikation (Kühlerlüfter)
- 22: Motorraum
- 23: Motor
- 24: Motorapplikations-Steuergerät (Steuerelektronik)
- 25: Batterie
- 26: Powerleitung
- 27: Powerleitung
- 28: Steuereinheit (Motorsteuergerät)
- 29: Steuerleitung
- 30: Steuerleitung
- 31: Powerleitung
- 32: Powerleitung
- 33: 2-poliger Stecker
- 34: mehrphasiger DC/DC-Wandler
- 34a: Phase 1
- 34b: Phase 2
- 34c: Phase 3
- 35: EMV-Filter
- 35': EMV-Filter
- 36: Steuereinheit
- 37: Prozessor
- 38: Schalter
- 39: Schalter
- 40: Induktivität
- 41: Eingangskondensator
- 42: Ausgangskondensator
- S: Spritzschutz

## Patentansprüche

1. System zum Betreiben einer Gleichstrom-Motorapplikation (21) für ein Kraftfahrzeug, umfassend
- wenigstens eine Gleichstrom-Motorapplikation (21) und
- ein Motorapplikations-Steuergerät (24) zum Steuern der wenigstens einen Gleichstrom-Motorapplikation (21),
**dadurch gekennzeichnet, dass**
das Motorapplikations-Steuergerät (24) von der Gleichstrom-Motorapplikation (21) entfernt angeordnet ist und einen DC-DC-Wandler (34) zur Ansteuerung wenigstens einer Gleichstrom-Motorapplikation (21) über Powerleitungen mittels einer Gleichspannung aufweist.

2. System nach Anspruch 1, wobei die Gleichstrom-Motorapplikation (21) innerhalb eines Motorraums (22) eines Kraftfahrzeugs anordnungsfähig und das Motorapplikations-Steuergerät (24) außerhalb des Motorraums (22) anordnungsfähig ist.

3. System nach Anspruch 1 oder 2, wobei das Motorapplikations-Steuergerät (24) über zwei Leitungen (31, 32) mit der Gleichstrom-Motorapplikation (21) verbunden ist.

4. System nach Anspruch 3, wobei die zwei Leitungen (31, 32) über einen zweipoligen Stecker (33) mit der Gleichstrom-Motorapplikation (21) verbunden sind.

5. System nach einem der Ansprüche 1 bis 4, wobei die Gleichstrom-Motorapplikation (21) ein Kühlerlüfter ist.

6. System nach einem der Ansprüche 1 bis 4, wobei die Gleichstrom-Motorapplikation (21) eine Kraftstoffpumpe ist.

7. System nach einem der vorhergehenden Ansprüche, wobei der DC/DC-Wandler ein mehrphasiger DC/DC-Wandler ist.

8. System nach Anspruch 7, wobei der mehrphasiger DC/DC-Wandler drei Phasen aufweist.

9. System nach Anspruch 7 oder 8, wobei der mehrphasige DC/DC-Wandler eingangs- und/oder ausgangsseitig einen EMV-Filter aufweist.

10. System nach einem der vorhergehenden Ansprüche, wobei zwischen der Gleichstrom-Motorapplikation (21) und dem Motorapplikations-Steuergerät (24) eine Spritzwand (S) angeordnet ist.

11. System nach Anspruch 10, wobei die Gleichstrom-Motorapplikation (21) auf der Motorraumseite der Spritzwand (S) und das Motorapplikations-Steuergerät (24) auf der Innenraumseite der Spritzwand (S) anordenbar sind.

12. System nach einem der vorhergehenden Ansprüche, umfassend einen externen Signalgeber (28), der das Motorapplikations-Steuergerät (24) mit einem pulsweitenmodulierten Signal speist.

13. System nach Anspruch 12, wobei es sich bei dem externen Signalgeber (28) um das Motorsteuergerät handelt.

14. System nach Anspruch 12 oder 13, wobei das pulsweitenmodulierte Signal in dem Motorapplikations-Steuergerät (24) ausgewertet und zur Ansteuerung des DC/DC-Wandlers aufbereitet wird.

15. Motorapplikations-Steuergerät (24), aufweisend einen DC/DC-Wandler zur Verwendung in einem System nach einem der vorhergehenden Ansprüche.

## Claims

1. System for operating a direct-current motor application (21) for a motor vehicle, comprising
- at least one direct-current motor application (21) and
- a motor-application control device (24) for controlling the at least one direct-current motor application (21),
**characterized in that** the motor-application control device (24) is arranged at a distance from the direct-current motor application (21) and has a DC/DC converter (34) for driving at least one direct-current motor application (21) using a DC voltage by means of power lines.

2. System according to Claim 1, wherein the direct-current motor application (21) can be arranged within an engine compartment (22) of a motor vehicle, and the motor-application control device (24) can be arranged outside the engine compartment (22).

3. System according to Claim 1 or 2, wherein the motor-application control device (24) is connected to the direct-current motor application (21) by means of two lines (31, 32).

4. System according to Claim 3, wherein the two lines (31, 32) are connected to the direct-current motor application (21) by means of a two-pole plug (33).

5. System according to one of Claims 1 to 4, wherein the direct-current motor application (21) is a radiator fan.

6. System according to one of Claims 1 to 4, wherein the direct-current motor application (21) is a fuel pump.

7. System according to one of the preceding claims, wherein the DC/DC converter is a polyphase DC/DC converter.

8. System according to Claim 7, wherein the polyphase DC/DC converter has three phases.

9. System according to Claim 7 or 8, wherein the polyphase DC/DC converter has an EMC filter at the input end and/or at the output end.

10. System according to one of the preceding claims, wherein a bulkhead (S) is arranged between the direct-current motor application (21) and the motor-application control device (24).

11. System according to Claim 10, wherein the direct-current motor application (21) can be arranged on the engine compartment side of the bulkhead (S), and the motor-application control device (24) can be arranged on the interior side of the bulkhead (S).

12. System according to one of the preceding claims, comprising an external signal transmitter (28) which feeds a pulse-width-modulated signal to the motor-application control device (24).

13. System according to Claim 12, wherein the external signal transmitter (28) is the motor control device.

14. System according to Claim 12 or 13, wherein the pulse-width-modulated signal is evaluated in the motor-application control device (24) and is processed in order to drive the DC/DC converter.

15. Motor-application control device (24), having a DC/DC converter for use in a system according to one of the preceding claims.

## Revendications

1. Système d'opération d'une application de moteur courant continu (21) pour un véhicule automobile, comprenant
- au moins une application de moteur courant continu (21) ; et
- un appareil de commande d'application de moteur (24) servant à commander l'au moins une application de moteur courant continu (21) ;
**caractérisé en ce que**
l'appareil de commande d'application de moteur (24) est disposé à une certaine distance de l'application de moteur courant continu (21) et comporte un convertisseur CC-CC (34) servant à exciter au moins une application de moteur courant continu (21) via des câbles d'alimentation en courant au moyen d'une tension continue.

2. Système selon la revendication 1, l'application de moteur courant continu (21) pouvant être disposée à l'intérieur d'un compartiment moteur (22) d'un véhicule automobile et l'appareil de commande d'application de moteur (24) pouvant être disposé à l'extérieur du compartiment moteur (22).

3. Système selon la revendication 1 ou 2, l'appareil de commande d'application de moteur (24) étant relié à l'application de moteur courant continu (21) via deux câbles (31, 32).

4. Système selon la revendication 3, les deux câbles (31, 32) étant reliés à l'application de moteur courant continu (21) via une fiche (33) à deux pôles.

5. Système selon l'une quelconque des revendications 1 à 4, l'application de moteur courant continu (21) étant un ventilateur de refroidisseur.

6. Système selon l'une quelconque des revendications 1 à 4, l'application de moteur courant continu (21) étant une pompe à carburant.

7. Système selon l'une quelconque des revendications précédentes, le convertisseur CC/CC étant un convertisseur CC/CC polyphasé.

8. Système selon la revendication 7, le convertisseur CC/CC polyphasé comportant trois phases.

9. Système selon la revendication 7 ou 8, le convertisseur CC/CC polyphasé comportant un filtre de compatibilité électromagnétique disposé du côté d'entrée et/ou du côté de sortie.

10. Système selon l'une quelconque des revendications précédentes, une paroi d'injection (S) étant disposée entre l'application de moteur courant continu (21) et l'appareil de commande d'application de moteur (24).

11. Système selon la revendication 10, l'application de moteur courant continu (21) pouvant être agencée sur le côté de compartiment moteur de la paroi d'injection (S) et l'appareil de commande d'application de moteur (24) pouvant être agencé sur le côté d'habitacle de la paroi d'injection (S).

12. Système selon l'une quelconque des revendications précédentes, comprenant un émetteur de signaux (28) externe alimentant l'appareil de commande d'application de moteur (24) avec un signal modulé en largeur d'impulsion.

13. Système selon la revendication 12, l'émetteur de signaux (28) externe étant l'appareil de commande du moteur.

14. Système selon la revendication 12 ou 13, le signal modulé en largeur d'impulsion étant analysé dans l'appareil de commande d'application de moteur (24) et étant diffusé pour exciter le convertisseur CC/CC.

15. Appareil de commande d'application de moteur (24), comportant un convertisseur CC/CC à utiliser dans un système selon l'une quelconque des revendications précédentes.
